# EUROPÄISCHE PATENTSCHRIFT

(11) **EP 1 513 412 B1**
(45) Veröffentlichungstag und Bekanntmachung des Hinweises auf die Patenterteilung: **28.02.2007**
(21) Anmeldenummer: 03740152.8
(22) Anmeldetag: 27.05.2003
(51) Int. Cl.: A23F 5/24, A23F 5/46, A23F 5/48, A23L 1/22, A23L 1/234, A23F 5/44

(54) **KAFFEE-AROMA MIT VERBESSERTER STABILITÄT**
COFFEE AROMA HAVING AN IMPROVED STABILITY
AROME DE CAFE AYANT UNE MEILLEURE STABILITE

(30) Priorität: 31.05.2002 DE 10224083
(43) Veröffentlichungstag der Anmeldung: 16.03.2005
(73) Patentinhaber: Symrise GmbH & Co. KG, 37603 Holzminden (DE)
(72) Erfinder: KINDEL, Günter, 37671 Höxter (DE); KRAMMER, Gerhard, 37603 Holzminden (DE); TRAUTZSCH, Stephan, 37603 Holzminden (DE)
(74) Vertreter: Eisenführ, Speiser & Partner
(86) Internationale Anmeldenummer: PCT/EP2003/005542
(87) Internationale Veröffentlichungsnummer: WO 2003/101216

(56) Entgegenhaltungen:
- WO-A-95/11595
- US-A- 3 962 321
- US-A- 4 001 454
- US-A- 4 092 334
- US-A- 5 580 593
- SEMMELROCH P ET AL: "ANALYSIS OF ROASTED COFFEE POWDERS AND BREWS BY GAS CHROMATOGRAPHY-OLFACTOMETRY OF HEADSPACE SAMPLES" LEBENSMITTEL WISSENSCHAFT UND TECHNOLOGIE, ACADEMIC PRESS, LONDON, GB, Bd. 28, Nr. 3, 1995, Seiten 310-313, XP000602989 ISSN: 0023-6438

## Beschreibung

Die vorliegende Erfindung bezieht sich auf Aromazusammensetzungen, die in der Lage sind, Nahrungsmitteln ein Aroma von Kaffee und Kaffee-haltigen Getränken, insbesondere von frisch gemahlenem und frisch gebrühtem Kaffee-Getränken zu verleihen und deren Haltbarkeit im Rahmen der handelsüblichen Mindesthaltbarkeitszeiträume liegt. Weiterhin bezieht sich die Erfindung auf Nahrungsmittel und insbesondere auf Instant- oder Trockenprodukte, die mit derartigen Zusammensetzungen aromatisiert sind. Weiterhin bezieht sich die Erfindung auf Aromazusammensetzungen, die in der Lage sind, Raumluft und/oder Gegenständen ein Aroma nach frisch gemahlenem oder frisch gebrühtem Kaffee zu verleihen.

Es gibt ein ständiges Bedürfnis nach neuen Aromazusammensetzungen, um Nahrungsmitteln gewünschte Aromen zu verleihen oder das vorhandene Aroma von Nahrungsmitteln zu verstärken, zu verbessern oder zu modifizieren. Die Anforderung an diese Aromenkompositionen sind neben einem authentischen, dem Vorbild entsprechenden, Aromaprofil, insbesondere auch die Haltbarkeit und Stabilität der Aromaeigenschaften in einem Lebensmittelendprodukt für den Mindesthaltbarkeitszeitraum, der üblicherweise für das Lebensmittel selbst im Handel vorgegeben wird. Derartige Aromazusammensetzungen im Bereich von frisch gebrühtem oder frisch gemahlenem Kaffee können vom röstigen, süßen, kakaoartigen, karamelartigen oder schwarz gerösteten Typ sein. Nach einem haltbaren Aroma von frisch gemahlenem und frisch gebrühtem Kaffee, wie Bohinen-Kaffee, Cappuccino oder Espresso, wurde vielfach gesucht, aber es hat sich bisher als sehr schwer erreichbar herausgestellt.

WO 00/69274 beschreibt die gemeinsame Anwendung von Kaffee-Aroma und Kaffee-Extrakt in Getränke-Applikationen. Die getrennte Lagerung von Aroma und Konzentrat verbessert die Stabilität des Gesamtsystems. Es ist jedoch bekannt, dass Kaffee-Aromen insbesondere in der Flüssiganwendung nur begrenzt stabil sind.

In KR-A 8802027 wird ein Verfahren für die Herstellung einer aromareichen Fraktion aus Kaffec-Extrakt und deren Verwendung für Instant-Getränke beschrieben. Dabei wird gefriergetrockneter Kaffee-Extrakt und die sprühgetrocknete Aromafraktion in Kombination zur Verbesserung der Aromaeigensehaften von Instant-Getränken mit Kaffee-Aroma eingesetzt.

Für die Herstellung einer Aromamischung, die den sensorischen Eindruck von frisch gebrühtem Kaffee hervorruft, ist die Verwendung von verschiedenen Aromastoffen aus unterschiedlichen chemischen Stoffklassen notwendig. Einzelne Aromakomponenten sind ungeeignet, um einem Nahrungsmittel ein echtes und vollständiges Kaffeearoma zu verleihen. In Mischungen nehmen einzelne Aromastoffe bevorzugt an chemischen Reaktionen teil. Diese Reaktionen führen zu einer verringerten Lagerfähigkeit und verringerten Stabilität von Kaffeearomakompositionen. Dies trifft sowohl auf die Formulierung mit einem flüssigen Träger sowie in der Formulierung als trockenes Aroma zu.

In der Veröffentlichung von Mayer, Czerny und Grosch (Eur. Food Res Technol. 2000, 211, 272-276) wurde beschrieben, dass im typischen Aroma von gerösteten Kaffee-Bohnen etwa 25 aromawirksame Einzelkomponenten identifiziert wurden. Die Autoren beschreiben, dass durch Zusammenmischen von mindestens 24 dieser Komponenten das Aroma von Kaffee nachgebildet werden kann. Die auf diese Weise hergestelltes Flüssigaroma ist insbesondere auch auf den Üblichen Trägersystemen durch geringe Stabilität gekennzeichnet. Schon nach kurzer Zeit gehen die typischen Kaffee-Noten verloren. Im Verlauf der Lagerung dieser Nachbildung entstehen Fehlnoten, die als faulig, chemisch und angebrannt zu bezeichnen sind.

US 5,580,593 beschreibt ein Verfahren zur Verkapselung von Aroma- oder Riechstoffen für Getränke, insbesondere Kaffee. Dazu wird eine Öl-iii-Wasser Emulsion, die die Aroma- oder Riechstoffe enthält, versprüht und von einem Getränkepulver aufgenommen.

Aus WO 95/11595 ist ein Verfahren zur Herstellung aromatisiertem Kaffees oder nach Kaffee schmeckender Lebensmittel bekannt, bei dem zunächst ein kaffcearomahaltiges Gas mit bestimmten Silikaten entwässert wird. Das entwässerte Aromagas wird anschließend von einem Absorbens aufgenommen, welches dem Getränk oder Lebensmittel zugesetzt wird.

Semmelroch et al. beschreiben in dem Artikel: "Analysis of Roasted Coffee Powders and Brews by Gas Chromatography-Olfactometry of Headspace Samples', Lebensmittelwissen-schaft und -technologie, Academic Press, London, Band 28, Nr. 3, 1995, Seiten 310-313" die gaschromatographische Trennung und Analyse der Aromastoffe von geröstetem Kaffee, wobei einzelne Fraktionen des Trennung geruchlich klassifiziert wurden

Es besteht daher ein Bedarf nach einfachen Aromazusammensetzungen, die über einen handelsüblichen Mindesthaltbarkeitszeitraum in der Lage sind, Nahrungsmitteln ein Aroma von Kaffee und Kaffee-haltigen Getränken, insbesondere von frisch gemahlenem und frisch gebrühtem Kaffee-Getränken, zu verleihen. Bevorzugt sollte eine Aromazusammensetzung weniger als 24 Aromaverbindungen enthalten und länger als 6 Monate, bevorzug länger als 12 Monate, insbesondere bevorzugt länger als 18 Monate haltbar sein.

Gleichermaßen gibt es einen Bedarf nach Nahrungsmitteln, die mit einer Mischung von Aromakomponenten derart aromatisiert sind, dass das resultierende Produkt einen Geschmack oder ein Aroma nach frisch gemahlenem und frisch gebrühtem Kaffee, Kaffee-Macchiato, Cappuccino oder Espresso aufweist.

Primärer Gegenstand der vorliegenden Erfindung ist eine Mehrkomponenten-Aromazusammensetzung zur Vermittlung eines Kaffee-Aromas, umfassend die folgenden Aromastoffe einer Gruppe 1:
1a) Methylfuranthiol-2,3
1b) Furfurylthiol
1c) Methanthiol
1d) 3-Methyl-2-buten-1-thiol (Prenylthiol)
1e) Methylthiobutylformiat-3,3
sowie in einer oder mehreren von den Aromastoffen der Gruppe 1 getrennten Komponente bzw. Komponenten die folgenden Aromastoffe einer Gruppe 2:
2a) 3-Methylthiopropanal
2b) o-Methylthiophenol (Thioguajakol)
2c) 2-Acetyl-2-thiazolin (Acetylthiazolin)
2d) 2-Acetylthiazol,
die folgenden Aromastoffe einer Gruppe 3:
3a) 2-Methylbutanal
3b) 3-Methylbutanal
3c) Butandion -2,3
3d) Methyldiethylpyrazin-3,5,2
3e) 2-Ethyl-3,5-dimethylpyrazin und/oder 2-Ethyl-3,6-dimethylpyrazin und/oder 2 (oder 3)-ethyl-3,5 (oder 2,5)-dimethyl-pyrazin
3f) 2-Methoxy 3-(1-methylpropyl)-pyrazin, (Methoxyisobutylpyrazin-2,3)
3g) 4-Vinylguajacol
3h) 2,5-Dimethyl-4-hydroxy-3(2H)-furanon, (Dimethylhydroxyfuranon-2,5,4,3)
3i) 4-Methyl-5-ethyl-3-hydroxy-2(5H)-furanon, (Methylethylhydroxyfuranon-4,5,3,2)
sowie
die folgenden Aromastoffe einer Gruppe 4:
4a) Acetaldehyd
4b) Propionaldehyd
4c) Damascenon-beta
4d) Pentandion-2,3.

Gegenstand der vorliegenden Erfindung ist zudem ein entsprechendes Verfahren, um Nahrungsmitteln oder anderen Gegenständen ein Aroma von frisch gemahlenem und frisch gebrühtem Kaffee zu verleihen, dadurch gekennzeichnet, dass die für den Aromaeindruck von frisch gebrühtem oder frisch gemahlenem Kaffee notwendigen Aromastoffe in physikalisch getrennter Formulierung hergestellt und z.B. für den Einsatz in Lebensmittel- oder Parfümerieprodukten kombiniert bzw. rekombiniert werden. In dem erfindungsgemäßen Verfahren wird vorzugsweise eine erfindungsgemäße Mehrkomponenten-Aromazusammensetzung eingesetzt.

Bevorzugte Ausgestaltungen der Erfindung ergeben sich aus den abhängigen Ansprüchen und der nachfolgenden Beschreibung.

Die Erfindung basiert auf der Feststellung, dass die Verbindungen der Gruppen 1 bis 4 (vgl. auch die nachfolgenden Tabellen 1 bis 4) in Aromakompositionen das Aromaprofil von frisch gemahlenem und frisch gebrühtem Kaffee ergeben.

### Gruppe 1: Untermischung "Verbindungen mit einer freien Thiol-Gruppe"

Es wurde gefunden, dass für die authentische Nachstellung des Aromaprofiles von frisch gemahlenem und frisch geröstetem Kaffee die in Gruppe 1 gelisteten Verbindungen 1a bis 1e unverzichtbar sind.

**Tabelle 1**

| Aromastoffe der Gruppe 1 ; Aromastoffe mit einer freien Thiol-Gruppe | | | |
|---|---|---|---|
| Nummer | Substanz | FEMA | CAS Nummer |
| (1a) | Methylfuranthiol-2,3 | 3188 | 28588-74-1 |
| (1b) | Furfurylthiol | 2493 | 98-02-2 |
| (1c) | Methanthiol | 2716 | 74-93-1 |
| (1d) | 3-Methyl-2-buten-1-thiol (Prenylthiol) | 3896 | 5287-45-6 |
| (1e) | Methylthiobutylformiat-3,3 | 3855 | 50746-10-6 |

### Gruppe 2: Untermischung "schwefelhaltige Aldehyde, Phenol, Thiazoline und Thiazole"

Es wurde gefunden, dass für die authentische Nachstellung des Aromaprofiles von frisch gemahlenem und frisch geröstetem Kaffee die in Gruppe 2 gelisteten Verbindungen 2a bis 2d unverzichtbar sind.

**Tabelle 2**

| Aromastoffe der Gruppe 2; schwefelhaltige Aldehyde, Phenol, Thiazoline und Thiazole | | | |
|---|---|---|---|
| Nummer | Substanz | FEMA | CAS Nummer |
| (2a) | 3-Methylthiopropanal | 2747 | 3268-49-3 |
| (2b) | o-Methylthiophenol (Thioguajakol) | 3210 | 1073-29-6 |
| (2c) | 2-Acetyl-2-thiazolin (Acetylthiazolin) | 3817 | 29926-41-8 |
| (2d) | 2-Acetylthiazol | 3328 | 24295-03-2 |

### Gruppe 3: Basis-Noten: Aldehyde, Ketone, Pyrazine, Phenole, Furanone

Es wurde gefunden, dass für die authentische Nachstellung des Aromaprofiles von frisch gemahlenem und frisch geröstetem Kaffee die in Gruppe 3 gelisteten Verbindungen 3a bis 3h unverzichtbar sind.

**Tabelle 3**

| Aromastoffe, die keinen Schwefel enthalten: Aldehyde, Ketone, Pyrazine, Phenole, Furanone | | | |
|---|---|---|---|
| Nummer | Substanz | FEMA | CAS Nummer |
| (3a) | 2-Methylbutanal | 2691 | 96-17-3 |
| (3b) | 3-Methylbutanal | 2692 | 590-86-3 |
| (3c) | Butandion-2,3 | 2370 | 431-03-8 |
| (3d) | Methyldiethylpyrazin-3,5,2 | 3916 | 18138-05-1 |
| (3e) | 2-Ethyl-3,5-dimethylpyrazin, | 3149 | 13925-07-0 |
| | 2-Ethyl-3,6-dimethylpyrazin | | 13360-65-1 |
| | (2 (oder 3)-ethyl-3,5 (oder 2,5)-dimethylpyrazin) | | 55031-15-7 |
| (3f) | 2-Methoxy-3-(1-methylpropyl)-pyrazin (Methoxyisobutylpyrazin-2,3) | 3433 | 24168-70-5 |
| (3g) | 4-Vinylguajacol | 2675 | 7786-61-0 |
| (3h) | 2,5-Dimethyl-4-hydroxy-3(2H)-furanon (Dimethylhydroxyfuranon-2,5,4,3) | 3174 | 3658-77-3 |
| (3i) | 4-Methyl-5-ethyl- 3-hydroxy-2(5H)-furanon (Methylethylhydroxyfuranon-4,5,3,2) | 3153 | 698-10-2 |

### Gruppe 4: Untermischung Abrundungsnoten: Aldehyde, Norisoprenoide, Ketone

Es wurde gefunden, dass für die authentische Nachstellung des Aromaprofiles von frisch gemahlenem und frisch geröstetem Kaffee die in Gruppe 4 gelisteten Verbindungen 4a bis 4d unverzichtbar sind.

**Tabelle 4**

| Aromastoffe, die keinen Schwefel enthalten und für Abrundungs-Noten wichtig sind | | | |
|---|---|---|---|
| Nummer | Substanz | FEMA | CAS Nummer |
| (4a) | Acetaldehyd | 2003 | 75-07-0 |
| (4b) | Propionaldehyd | 2923 | 123-38-6 |
| (4c) | Damascenon-beta | 3420 | 23696-85-7 |
| (4d) | Pentandion-2,3 | 2841 | 600-14-6 |

Die Gruppen 2 bis 4 können darüber hinaus weitere Aromastoffe wie beispielsweise Dimethyltrisulfid und/oder Furfurylthiopentanon-4,2 und/oder Prenylthioacetat und/oder Vanillin und/oder Acetylmethylcarbinol und/oder Hexandion-3,4 und/oder Methylcyclohexenolon und/oder Methylcyclopentenolon und/oder 2-Methoxy-3-methylpyrazin und/oder Tetrahydrochinoxalin enthalten.

In Kompositionsversuchen zeigten unterschiedliche Mengenverhältnisse der Verbindungen in den Gruppen 1 bis 4 röstige, kaffee-typische Aromaeindrücke. Der Charakter von frisch-gebrühtem Kaffee wurde insbesondere durch die in den Tabellen 5 bis 8 angegebenen Mengenverhältnisse erreicht.

**Tabelle 5**

| Aromastoffe der Gruppe 1 | | |
|---|---|---|
| Nummer | Substanz | Gewichtsteile |
| (1a) | Methylfuranthiol-2,3 | 0,4-2,0 |
| (1b) | Furfurylthiol | 1,2-2,2 |
| (1c) | Methanthiol | 40-53 |
| (1d) | 3-Methyl-2-buten-1-thiol (Prenylthiol) | 1,2-3,2 |
| (1e) | Methylthiobutylformiat-3,3 | 0,4-4 |

**Tabelle 6**

| Aromastoffe der Gruppe 2 | | |
|---|---|---|
| Nummer | Substanz | Gewichtsteile |
| (2a) | 3-Methylthiopropanal | 2,0-2,5 |
| (2b) | o-Methylthiophenol (Thioguajakol) | 0,1-1,5 |
| (2c) | 2-Acetyl-2-thiazolin (Acetylthiazolin) | 0,1-1,5 |
| (2d) | 2-Acetylthiazol | 0,1-1,5 |

**Tabelle 7**

| Aromastoffe der Gruppe 3 | | |
|---|---|---|
| Nr. | Substanz | Gewichtsteile |
| (3a) | 2-Methylbutanal | 200-350 |
| (3b) | 3-Methylbutanal | 140-220 |
| (3c) | Butandion-2,3 | 400-520 |
| (3d) | Methyldiethylpyrazin-3,5,2 | 0,2-2,0 |
| (3e) | 2-Ethyl-3,5-dimethylpyrazin, | 2,1-5,0 |
| | 2-Ethyl-3,6-dimethylpyrazin | |
| | (2 (oder 3)-ethyl-3,5 (oder 2,5)-dimethyl-pyrazin) | |
| (3f) | 2-Methoxy-3-(1-methylpropyl)-pyrazin (Methoxyiso-butylpyrazin-2,3) | 0,1-1,8 |
| (3g) | 4-Vinylguajacol | 40-140 |
| (3h) | 2,5-Dimethyl-4-hydroxy-3(2H)-furanon, (Dimethylhydroxyfuranon-2,5,4,3) | 220-680 |
| (3i) | 4-Methyl-5-ethyl-3-hydroxy-2(5H)-furanon (Methylethylhydroxyfuranon-4,5,3,2) | 0,5-2 |

**Tabelle 8**

| Aromastoffe der Gruppe 4 | | |
|---|---|---|
| Nummer | Substanz | Gewichtsteile |
| (4a) | Acetaldehyd | 90-1200 |
| (4b) | Propionaldehyd | 20-180 |
| (4c) | Damascenon-beta | 1-5 |
| (4d) | Pentandion-2,3 | 30-360 |

Die Aromastoffe der Gruppe 1 können gemeinsam in einer Komponente eingesetzt werden. In einer bevorzugten Ausführungsform wurden die Aromastoffe der Gruppe 1 in die beiden Untergruppen 1.1 und 1.2 unterteilt, wobei die Untergruppen 1.1 und 1.2 jeweils getrennt vorformuliert, d.h. jeweils separat auf Trägermaterial aufgebracht werden. Untergruppe 1.1 umfasst folgende Verbindungen: Methylfuranthiol-2,3 (1a), Furfurylthiol (1b), 3-Methyl-2-buten-1-thiol (Prenylthiol) (1d), Methylthiobutylformiat-3,3 (1e). Untergruppe 1.2 umfasst Methanthiol (1c).

Die Mengenverhältnisse der Untergruppen 1.1 und 1.2 liegen vorteilhafterweise im Bereich 1 :5 bis 1:50, bevorzugt im Bereich 1:10 und 1:30.

Besonders bevorzugt werden Aromamischungen mit der in den Tabellen 9 bis 12 genannten Zusammensetzung verwendet.

**Tabelle 9**

| Aromastoffe der Gruppe 1 | | |
|---|---|---|
| Nummer | Substanz | Gewichtsteile |
| (1a) | Methylfuranthiol-2,3 | 1,00 |
| (1b) | Furfurylthiol | 2 |
| (1c) | Methanthiol | 40 |
| (1d) | 3-Methyl-2-buten-1-thiol (Prenylthiol) | 2 |
| (1e) | Methylthiobutylformiat-3,3 | 2 |

**Tabelle 10**

| Aromastoffe der Gruppe 2 | | |
|---|---|---|
| Nummer | Substanz | Gewichtsteile |
| (2a) | 3-Methylthiopropanal | 2 |
| (2b) | o-Methylthiophenol (Thioguajakol) | 1 |
| (2c) | 2-Acetyl-2-thiazolin (Acetylthiazolin) | 1 |
| (2d) | 2-Acetylthiazol | 1 |

**Tabelle 11**

| Aromastoffe der Gruppe 3 | | |
|---|---|---|
| Nummer | Substanz | Gewichtsteile |
| (3a) | 2-Methylbutanal | 250 |
| (3b) | 3-Methylbutanal | 150 |
| (3c) | Butandion-2,3 | 400 |
| (3d) | Methyldiethylpyrazin-3,5,2 | 1 |
| (3e) | 2-Ethyl-3,5-dimethylpyrazin, | 3 |
| | 2-Ethyl-3,6-dimethylpyrazin | |
| | (2 (oder 3)-ethyl-3,5 (oder 2,5)-dimethyl-pyrazin) | |
| (3f) | 2-Methoxy-3-(1-methylpropyl)-pyrazin (Methoxyisobutylpyrazin-2,3) | 1 |
| (3g) | 4-Vinylguajacol | 50 |
| (3h) | 2,5-Dimethyl-4-hydroxy-3(2H)-furanon, (Dimethylhydroxyfuranon-2,5,4,3) | 300 |
| (3i) | 4-Methyl-5-ethyl-3-hydroxy-2(5H)-furanon (Methylethylhydroxyfuranon-4,5,3,2) | 1 |

**Tabelle 12**

| Aromastoffe der Gruppe 4 | | |
|---|---|---|
| Nummer | Substanz | Gewichtsteile |
| (4a) | Acetaldehyd | 500 |
| (4b) | Propionaldehyd | 100 |
| (4c) | Damascenon-beta | 1 |
| (4d) | Pentandion-2,3 | 100 |

Eine weitere bevorzugte Aromamischung umfasst die in den Tabellen 13 bis 16 aufgeführten Aromastoffe.

**Tabelle 13**

| Aromastoffe der Gruppe 1 | | |
|---|---|---|
| Nummer | Substanz | Gewichtsteile |
| (1a) | Methylfuranthiol-2,3 | 0,675 |
| (1b) | Furfurylthiol | 1,65 |
| (1c) | Methanthiol | 45,35 |
| (1d) | 3-Methyl-2-buten-1-thiol (Prenylthiol) | 1,65 |
| (1e) | Methylthiobutylformiat 3,3 | 0,75 |

**Tabelle 14**

| Aromastoffe der Gruppe 2 | | |
|---|---|---|
| Nummer | Substanz | Gewichtsteile |
| (2a) | 3-Methylthiopropanal | 2,2 |
| (2b) | o-Methylthiophenol (Thioguajakol) | 0,25 |
| (2c) | 2-Acetyl-2-thiazolin (Acetylthiazolin) | 0,25 |
| (2d) | 2-Acetylthiazol | 0,25 |

**Tabelle 15**

| Aromastoffe der Gruppe 3 | | |
|---|---|---|
| Nummer | Substanz | Gewichtsteile |
| (3a) | 2-Methylbutanal | 310 |
| (3b) | 3-Methylbutanal | 180 |
| (3c) | Butandion-2,3 | 480 |
| (3d) | Methyldiethylpyrazin-3,5,2 | 0,65 |
| (3e) | 2-Ethyl-3,5-dimethylpyrazin, 2-Ethyl-3,6-dimethylpyrazin (2 (oder 3)-ethyl-3,5 (oder 2,5)-dimethyl-pyrazin) | 2,40 |
| (3f) | 2-Methoxy-3-(1-methylpropyl)-pyrazin (Methoxyisobutylpyrazin-2,3) | 0,55 |
| (3g) | 4-Vinylguajacol | 100 |
| (3h) | 2,5-Dimethyl-4-hydroxy-3(2H)-furanon, (Dimethylhydroxyfuranon-2,5,4,3) | 650 |
| (3i) | 4-Methyl-5-ethyl-3-hydroxy-2(5H)-furanon (Methylethylhydroxyfuranon-4,5,3,2) | 1 |

**Tabelle 16**

| Aromastoffe der Gruppe 4 | | |
|---|---|---|
| Nummer | Substanz | Gewichtsteile |
| (4a) | Acetaldehyd | 1000 |
| (4b) | Propionaldehyd | 150 |
| (4c) | Damascenon-beta | 2 |
| (4d) | Pentandion-2,3 | 330 |

Eine weitere bevorzugte Aromamischung umfasst die in den Tabellen 17 bis 20 aufgeführten Aromastoffe.

**Tabelle 17**

| Aromastoffe der Gruppe 1 | | |
|---|---|---|
| Nummer | Substanz | Gewichtsteile |
| (1a) | Methylfuranthiol-2,3 | 1,5 |
| (1b) | Furfurylthiol | 2,0 |
| (1c) | Methanthiol | 50,0 |
| (1d) | 3-Methyl-2-buten-1-thiol (Prenylthiol) | 3,0 |
| (1e) | Methylthiobutylformiat-3,3 | 3,0 |

**Tabelle 18**

| Aromastoffe der Gruppe 2 | | |
|---|---|---|
| Nummer | Substanz | Gewichtsteile |
| (2a) | 3-Methylthiopropanal | 2,0 |
| (2b) | o-Methylthiophenol (Thioguajakol) | 0,5 |
| (2c) | 2-Acetyl-2-thiazolin (Acetylthiazolin) | 0,5 |
| (2d) | 2-Acetylthiazol | 0,5 |

**Tabelle 19**

| Aromastoffe der Gruppe 3 | | |
|---|---|---|
| Nummer | Substanz | Gewichtsteile |
| (3a) | 2-Methylbutanal | 200 |
| (3b) | 3-Methylbutanal | 200 |
| (3c) | Butandion -2,3 | 500 |
| (3d) | Methyldiethylpyrazin-3,5,2 | 2,0 |
| (3e) | 2-Ethyl-3,5-dimethylpyrazin, | 4,0 |
| | 2-Ethyl-3,6-dimethylpyrazin | |
| | (2 (oder 3)-ethyl-3,5 (oder 2,5)-dimethyl-pyrazin) | |
| (3f) | 2-Methoxy-3-(1-methylpropyl)-pyrazin (Methoxyisobutylpyrazin-2,3) | 1,0 |
| (3g) | 4-Vinylguajacol | 50 |
| (3h) | 2,5-Dimethyl-4-hydroxy-3(2H)-furanon, (Dimethylhydroxyfuranon-2,5,4,3) | 500 |
| (3i) | 4-Methyl-5-ethyl-3-hydroxy-2(5H)-furanon (Methylethylhydroxyfuranon-4,5,3,2) | 2 |

**Tabelle 20**

| Aromastoffe der Gruppe 4 | | |
|---|---|---|
| Nummer | Substanz | Gewichtsteile |
| (4a) | Acetaldehyd | 250 |
| (4b) | Propionaldehyd | 100 |
| (4c) | Damascenon-beta | 2 |
| (4d) | Pentandion-2,3 | 300 |

In überraschender Weise wurde festgestellt, dass die separate Formulierung von Gruppe 1 und den Gruppen 2, 3 und 4 nach dem Schema in Tabelle 21 zu einer deutlich verbesserten Stabilität und Haltbarkeit des Kaffee-Aromas in trockenen Anwendungsformen führt.

ln einer besonders bevorzugten Ausitihrungsform ist das erfindungsgemäße Verfahren daher dadurch gekennzeichnet, dass die Aromastoffe der Gruppen 1 bis 4 als separate Bausteine A bis D zu den nachfolgenden Kombinationen I bis IV kombiniert werden:
I die Aromastoffe der Gruppen 2, 3 und 4 gemeinsam in einer Komponente
   oder
II die Aromastoffe der Gruppen 2 und 4 gemeinsam in einer Komponente und die Aromastoffe der Gruppe 3 in einer separaten weiteren Komponente
   oder
III die Aromastoffe der Gruppen 3 und 4 gemeinsam in einer Komponente und die Aromastoffe der Gruppe 2 in einer separaten weiteren Komponente
   oder
IV die Aromastoffe der Gruppe 2 in einer Komponente, die Aromastoffe der Gruppe 3 in einer weiteren Komponente und die Aromastoffe der Gruppe 4 in noch einer weiteren separaten Komponente.

**Tabelle 21**

| Kombinationsschema für die getrennte Formulierung der Aromastoffe in den Gruppen 1 bis 4. | | | | |
|---|---|---|---|---|
| Kombination | Separate Bausteine | | | |
| | A | B | C | D |
| I | Gruppe 1 | Gruppe 2 | ----- | ----- |
| | | Gruppe 3 | | |
| | | Gruppe 4 | | |
| II | Gruppe 1 | Gruppe 2 | Gruppe 3 | ----- |
| | | Gruppe 4 | | |
| III | Gruppe 1 | Gruppe2 | Gruppe 3 | ----- |
| | | | Gruppe 4 | |
| IV | Gruppe 1 | Gruppe 2 | Gruppe 3 | Gruppe 4 |

Für die Rekombination der getrennt formulierten Aromabausteine A, B, C und D wurden die in Tabelle 22 aufgeführten Mengenverhältnisse als besonders günstig für das Aromaprofil von frisch gemahlenem und frisch gebrühtem Kaffee gefunden.

**Tabelle 22**

| Kombinationsschema für die getrennte Formulierung der Aromastoffe in den Gruppen 1 bis 4. Alle Angaben sind in Gewichtsteilen. | | | | |
|---|---|---|---|---|
| Kombination | Separate Bausteine | | | |
| | A | B | C | D |
| I | 40 bis 60 | 1800 bis 3300 | ----- | ----- |
| II | 40 bis 60 | 600 bis 1500 | 1400 bis 1800 | ----- |
| III | 40 bis 60 | 2 bis 6 | 1800 bis 3300 | ----- |
| IV | 40 bis 60 | 2 bis 6 | 1400 bis 1800 | 1600 bis 1500 |

Es wurde festgestellt, dass eine derartige Aromazusammensetzung Nahrungsmitteln, zum Beispiel Getränken, Instant-Getränken, Süßwaren, Backwaren und Fettfüllungen sowie Milchprodukten, das Aroma von frisch gebrühtem oder frisch gemahlenem Kaffee verleihen kann. Der Begriff "Aroma" wird hier so verstanden, dass er auch "Geschmack" umfasst, d. h. die sensorische Wahrnehmung. Ebenso wird der Begriff "aromatisieren" hier auch so verstanden, dass er "mit Geschmackstoffen versetzen" umfasst, wie einen Geschmack zu verleihen.

Überraschend wurde festgestellt, dass die Stabilität der gesamten Aromamischung, bestehend aus den Kombinationen I, II, III, IV der Bausteine A, B, C, D bestehend aus den Gruppen 1 bis 4, in der Lebensmittelanwendung durch die getrennte Formulierung erheblich verbessert wird. Für die Stabilität wesentlich ist die physikalische Trennung der Aromastoffe der Gruppe 1 von den übrigen Aromastoffen der Gruppen 2 bis 4. Die physikalische Trennung der Bausteine A, B, C, D kann z.B. durch folgende Formulierungsverfahren erfolgen:
- Emulsionen (z.B. Multipleemulsionen)
- Verkapselung (Granulierung, Extrusion, Gelatinekapseln, Koacervation etc.)
- Aufziehen auf Trägerstoffe (Plated Adsorption)
- Extrusion
- Dispersionen
- Molekulare Inklusion (Zeolithe, Cyclodextrine)
- getrennte Kondensation
- essbare Filme und Schichten
- Schichten-Coatings

Die Herstellung der Bausteine A, B, C, D in verkapselter Form kann dabei vorzugsweise wie in EP-A 870537, WO-A 00/36931 oder EP-A 1099385 beschrieben erfolgen.

Die Erfindung bezieht sich daher ferner auf aromatisierte Nahrungsmittel, die mit einem Aromasystem, das auf der Technologie der getrennten Formulierung basiert, hergestellt werden.

Bevorzugt ist die Trennung auf festen Trägersystemen. Entsprechend geeignete Trägersysteme für die getrennte Formulierung der Bausteine A, B, C, D sind beispielsweise:
Lactose - Dextrose
Maltodextrin
Mannit
Sorbit
MgCO₃
Silicagel
Mikro Cellulose
Harze (z.B. Damar-Harz)
Agar Agar
Gelatine
Molkepulver
Milchpulver
Fettpulver
Eiweißpulver
Malzextrakte (Karamel)
Cellulose
Stärke
modifizierte Stärke
Dextrine
Wachse
Pektine
Schellack
Pigmente
Verdickungsmittel

Die Bausteine A, B, C, D können auf gleichen oder verschiedenen Trägersystemen formuliert werden. Bevorzugt wird für alle Bausteine das gleiche Trägersystem angewendet.

Geeignete Trägersysteme für Raumbeduftungen sind Polymerträger auf organischer oder anorganischer Basis.

Bevorzugte Trägersysteme für Raumbeduftungen auf organischer Basis sind Polypropylenträger (z.B. Firma Membrana, Accurel MP 1000, mikroporöses Polypropylen-Pulver).

### Beispiele

### Beispiel 1

### Instant-Getränk

Grundrezeptur Instant-Getränk Typ Cappuccino

| Inhaltsstoff | Gewichtsteile |
|---|---|
| Zucker | 345 |
| Magermilchpulver | 291 |
| Löslicher Bohnenkaffee | 210 |
| Lactose | 128 |
| Stabilisator | 26 |
| Erfmdungsgemäßes Aroma | 0,05 - 5 |

In diesem Beispiel wird der Aromaeindruck nach frisch geröstetem und frisch gebrühtem Kaffee bei dem Aufgießen der Instant-Getränkemischung mit heißem Wasser durch simultane Freisetzung der Aromastoffe der einzelnen Untermischungen erzeugt. Erfindungsgemäßes Aroma wird in der Form hergestellt, dass die in Tabelle 21 aufgeführten Bausteine A, B, C, D bestehend aus Stoffen der Gruppen 1 bis 4 getrennt mit einem für Lebensmittel geeigneten oder für Beduftungszwecke geeigneten Trägersystem formuliert werden. Für die Anwendung im Instant-Getränkebereich können nun die in den Tabellen 21 und 22 aufgeführten Kombinationen gemischt werden.

Die Anwendung der beschriebenen Kaffee-Aromamischung, bestehend aus der Vermengung von getrennt formulierten Bausteinen A, B, C und D ist neben der Anwendung in Lebensmitteln auch für Parfümierungen interessant. Bei den Versuchen mit dem beschriebenen Aroma wurde überraschend gefunden, dass Gegenstände, umschlossene Räume und Gebäudeteile mit einem angenehmen Duft nach frisch geröstetem und frisch gebrühtem Kaffee aromatisiert werden können.

Eine weiter verbesserte Ausführungsform stellt die Trennung von Methanthiol (1c; Untergruppe 1.2) von den anderen Thiolen der Untergruppe 1.1 dar.

Methanthiol wird als 1 Gew.-%ige Lösung mit 20-25 Gew.-% Beladung in einem Sprühgranulat geträgert bzw.verkapselt.
Das Methanthiol-haltige Granulat wird mit den anderen getrennt formulierten (hier: verkapselten) Thiolen der Untergruppe 1.1 sowie den getrennt formulierten Aromastoffen der Gruppen 2 bis 4 zu einem in hervorragendem Maße an frisch geröstetem Kaffee erinnernden Mischungen kombiniert.

Der Vorteil der getrennten Verkapselung von Methanthiol und den anderen Thiolen liegt in der größeren Variabilität der daraus zu schaffenden Kombinationen. Methanthiol hat entgegen den anderen Thiolverbindungen einen deutlich größeren Dosierungsspielraum.

Die erfindungsgemäßen Kaffee-Aromamischungen werden üblicherweise mit Dosierungen von 10g-100g/100 kg Lebensmittel eingearbeitet.

### Beispiel 2

### Raumbeduftung

Die Aromabausteine A,B,C und D werden jeweils auf ein geeignetes inertes Trägermaterial mit adsorbierenden Eigenschaften appliziert.

Der Beladungsgrad des Flüssigbausteins auf das Trägermaterial kann üblicherweise von 1 Gew.-% bis 10 Gew.-% gewählt werden.

Als Trägermaterial kann beispielsweise ein Produkt der Firma Membrana, Accurel MP 1000 (mikroporöses Polypropylen-Pulver) verwendet werden.

Die so formulierten Bausteine werden anteilsmäßig analog der Tabellen 21 und 22 rekombinert.

Es wurde gefunden, dass die Lagerstabilität des nach o.g. Schemas formulierten Aromas deutlich höher ist, als die Lagerstabilität eines entsprechend gemischten Flüssigaromas.
- In einem geschlossen Gefäß verliert das Flüssigaroma nach 1-2 Tagen den typischen Geruch von frisch gebrühtem, bzw. frisch gemahlenem Kaffee und es bilden sich brandige und chemische Fehlnoten.
- In einen geschlossenen Gefäß bewahrt das erfindungsgemäß formulierte Aroma über einen Zeitraum von mind. einem Monat den typischen Geruch von frisch gebrühtem, bzw. frisch gemahlenem Kaffee ohne Ausbildung von störenden Fehlnoten.

Das nach o.g. Schema formulierte Gemisch der Aromabausteine A,B,C und D wird in folgenden Applikationen getestet:
1.) Einfache Exposition:
   Ca. 1 g des Gemisches wird in ein flaches, offenes Gefäß gegeben und in einem geschlossenen Raum exponiert. Bereits nach wenigen Sekunden ist in der Raumluft ein angenehmer typischer Geruch von frisch gebrühtem, bzw. frisch gemahlenem Kaffee wahrnehmbar. Auch nach einer Expositionsdauer von acht Stunden entspricht der Raumduft dem o.g. Profil.
2.) Exposition über Kartusche und Luftstrom:
   Ca. 2 g des Gemisches werden in eine Plastikkartusche gefüllt. Durch die Kartusche wird mit Hilfe eines Dosierungsapparates ein gepulster Luftstrom geleitet und in die Umgebungsluft entlassen. Innerhalb von geschlossenen Räumen wird so eine punktuelle und kontrollierte Raumbeduftung erzielt. Es wurde festgestellt, dass folgende Parameter in einem Abstand von 1-3 Metern vom Dosierungsapparat, einen angenehmen, typischen Geruch von frisch gebrühtem, bzw. frisch gemahlenem Kaffee erzeugen:
   Pulsfrequenz: 1-2 sec. Luftstrom, 10-20 sec. Pause
   Es wurde gefunden, dass dieser Versuchsaufbau eine punktuelle Raumbeduftung, im oben beschriebenen Intervallbetrieb, über den Zeitraum von mind. 24 Stunden ermöglicht.

   Je nach Raum- und Umgebungsparameter (Raumvolumen, Konvektion, seitliche Luftströmung etc.) ist eine Anpassung der Pulsfrequenz notwendig.
3.) Exposition über Doppelkartusche und getrennte Luftströme:
   In einer parallel angeordneten Doppelkartusche wird in Kammer 1 ein nach o.g. Schema formuliertes Gemisch der Bausteine A,B,C,D gefüllt (2-5 g). In Kammer 2 werden nur die nach o.g. Schema formulierten Bausteine A und C gefüllt (2-5 g im Verhältnis 1:10 - 10:1). Durch die Doppelkartusche wird, wie unter 2.) erwähnt, ein für jede Kartusche individuell einstellbarer gepulster Luftstrom geleitet. Neben einer beliebigen Variation des emittierten Kaffeeduftes kann durch diese Anordnung auch eine deutliche Verlängerung der Kaffeeduftausgabe in Vergleich zu 2.) erreicht werden (ca. 3-5 Tage im Intervallbetrieb).

### Beispiel 3

### Eiskaffeegetränk

### Grundrezeptur Eiskaffee Instantgetränk

| Inhaltsstoff | Gewichtsteile |
|---|---|
| Zucker | 787,5 |
| Dextrose | 157,5 |
| Löslicher Bohnenkaffee | 52,5 |
| | |
| Erfindungsgemäßes Aroma | 0,05 - 5 |

8 g dieser Mischung werden in 100 ml kalter Milch (3,5% Fett) intensiv verrührt.

Eiskaffeegetränke lassen besonders wegen der tiefen Temperatur und ihrer Zusammensetzung einen typischen Geschmack nach frisch gebrühtem Kaffee vermissen. In diesem Beispiel wird der Aromaeindruck nach frisch geröstetem und frisch gebrühtem Kaffee beim Verrühren der aromahaltigen Instantformulierung mit der Milch erzeugt. Der Charakter des Getränkes mit erfindungsgemäßem Aroma weist einen typischeren Geschmack in Richtung von frisch geröstetem und frisch gebrühtem Kaffee auf als die Formulierung ohne Aroma.

## Patentansprüche

1. Mehrkomponenten-Aromazusammensetzung zur Vermittlung eines Kaffee-Aromas, umfassend die folgenden Aromastoffe einer Gruppe 1:
1a) Methylfuranthiol-2,3
1b) Furfurylthiol
1c) Methanthiol
1d) 3-Methyl-2-buten-1-thiol (Prenylthiol)
1e) Methylthiobutylformiat-3,3
sowie in einer oder mehreren von den Aromastoffen der Gruppe 1 getrennten Komponente bzw. Komponenten die folgenden Aromastoffe einer Gruppe 2:
2a) 3-Methylthiopropanal
2b) o-Methylthiophenol (Thioguajakol)
2c) 2-Acetyl-2-thiazolin (Acetylthiazolin)
2d) 2-Acetylthiazol,
die folgenden Aromastoffe einer Gruppe 3:
3a) 2-Methylbutanal
3b) 3-Methylbutanal
3c) Butandion-2,3
3d) Methyldiethylpyrazin-3,5,2
3e) 2-Ethyl-3,5-dimethylpyrazin und/oder 2-Ethyl-3,6-dimethylpyrazin und/oder 2 (oder 3)-ethyl-3,5 (oder 2,5)-dimethyl-pyrazin
3f) 2-Methoxy-3-(1-methylpropyl)-pyrazin, (Methoxyisobutylpyrazin-2,3)
3g) 4-Vinylguajacol
3h) 2,5-Dimethyl-4-hydroxy-3(2H)-furanon, (Dimethylhydroxyfuranon-2,5,4,3)
3i) 4-Methyl-5-ethyl-3-hydroxy-2(5H)-furanon, (Methylethylhydroxyfuranon-4,5,3,2)
sowie
die folgenden Aromastoffe einer Gruppe 4:
4a) Acetaldehyd
4b) Propionaldehyd
4c) Damascenon-beta
4d) Pentandion-2,3.

2. Mehrkomponenten-Aromazusammensetzung nach Anspruch 1, wobei
I die Aromastoffe der Gruppen 2, 3 und 4 gemeinsam in einer Komponente
oder
II die Aromastoffe der Gruppen 2 und 4 gemeinsam in einer Komponente und die Aromastoffe der Gruppe 3 in einer separaten weiteren Komponente
oder
III die Aromastoffe der Gruppen 3 und 4 gemeinsam in einer Komponente und die Aromastoffe der Gruppe 2 in einer separaten weiteren Komponente
oder
IV die Aromastoffe der Gruppe 2 in einer Komponente, die Aromastoffe der Gruppe 3 in einer weiteren Komponente und die Aromastoffe der Gruppe 4 in noch einer weiteren separaten Komponente
eingesetzt werden.

3. Mehrkomponenten-Aromazusammensetzung nach einem der vorangehenden Ansprüche, wobei die Aromastoffe der Gruppe 1
- gemeinsam in einer Komponente
oder
- in zwei getrennten Komponenten eingesetzt werden, von denen die eine Komponente aus den Aromastoffen
1a) Methylfuranthiol-2,3
1b) Furfurylthiol
1d) 3-Methyl-2-buten-1-thiol (Prenylthiol)
1e) Methylthiobutylformiat-3,3
und die andere Komponente aus dem Aromastoff
1c) Methanthiol
besteht.

4. Mehrkomponente-Zusammensetzung nach einem der vorangehenden Ansprüche, wobei zumindest eine der eingesetzten Komponenten der Aromazusammensetzung auf einem festen Trägersystem formuliert ist.

5. Mehrkomponenten-Zusammensetzung nach Anspruch 4, wobei jede der eingesetzten Komponenten getrennt von der oder den anderen eingesetzten Komponenten auf einem festen Trägersystem formuliert ist, wobei das feste Trägersystem vorzugsweise für jede der eingesetzten Komponenten das Gleich ist.

6. Instant-Getränkemischung umfassend:
- eine Mehrkomponenten-Aromazusammensetzung nach einem der vorangehenden Ansprüche sowie
- weitere typische Bestandteile.

7. Nahrungsmittel, umfassend eine sensorisch wirksame Menge einer Mehrkomponenten-Zusammensetzung nach einem der Ansprüche 1 bis 5.

8. Verwendung einer Mehrkomponenten-Aromazusammensetzung nach einem der Ansprüche 1 bis 5 zum Erzeugen, Verstärken oder Modifizieren eines Kaffee-Aromas und/oder eines Kaffee-Geruchs.

9. Verfahren, um Gegenständen ein Aroma von frisch gemahlenem und frisch gebrühtem Kaffee zu verleihen, **dadurch gekennzeichnet, dass** die für den Aromaeindruck von frisch gebrühtem oder frisch gemahlenem Kaffee notwendigen Aromastoffe in physikalisch getrennter Formulierung hergestellt und für den Einsatz kombiniert bzw. rekombiniert werden.

10. Verfahren nach Anspruch 9, **dadurch gekennzeichnet, dass** Mehrkomponenten-Aromazusammensetzungen der Ansprüche 1 bis 4 eingesetzt werden.

11. Verfahren nach Anspruch 9 oder 10, **dadurch gekennzeichnet, dass** die Aromastoffe der Gruppen 1 bis 4 nach Anspruch 2 als separate Bausteine A bis D zu den nachfolgenden Kombinationen I bis IV kombiniert werden :
| Kombination | Separate Bausteine | | | |
|---|---|---|---|---|
| | A | B | C | D |
| I | Gruppe 1 | Gruppe 2 | ----- | ----- |
| | | Gruppe 3 | | |
| | | Gruppe 4 | | |
| II | Gruppe 1 | Gruppe 2 | Gruppe 3 | ----- |
| | | Gruppe 4 | | |
| III | Gruppe 1 | Gruppe 2 | Gruppe 3 | ----- |
| | | | Gruppe 4 | |
| IV | Gruppe 1 | Gruppe 2 | Gruppe 3 | Gruppe 4 |

12. Aromatisierte Nahrungsmittel, **dadurch gekennzeichnet, dass** sie nach dem Verfahren gemäß mindestens einem der Ansprüche 9 bis 11 hergestellt werden.

## Claims

1. Multi-component flavour composition for imparting a coffee flavour, comprising the following flavourings of a group 1:
1a) methylfuranthiol-2,3
1b) furfurylthiol
1c) methanethiol
1d) 3-methyl-2-butene-1-thiol (prenylthiol)
1e) methylthiobutylformate-3,3
and, in one or more component(s) separate from the flavourings of group 1, the following flavourings of a group 2:
2a) 3-methylthiopropanal
2b) o-methylthiophenol (thioguaiacol)
2c) 2-acetyl-2-thiazoline (acetylthiazoline)
2d) 2-acetylthiazole,
the following flavourings of a group 3:
3a) 2-methylbutanal
3b) 3-methylbutanal
3c) 2,3-butanedione
3d) methyldiethylpyrazine-3,5,2
3e) 2-ethyl-3,5-dimethylpyrazine and/or 2-ethyl-3,6-dimethylpyrazine and/or 2-(or 3-)ethyl-3,5-(or 2,5-)dimethylpyrazine
3f) 2-methoxy-3-(1-methylpropyl)-pyrazine (methoxyisobutylpyrazine-2,3)
3g) 4-vinylguaiacol
3h) 2,5-dimethyl-4-hydroxy-3(2H)-furanone (dimethylhydroxyfuranone-2,5,4,3)
3i) 4-methyl-5-ethyl-3-hydroxy-2(5H)-furanone (methylethylhydroxyfuranone-4,5,3,2)
and
the following flavourings of a group 4:
4a) acetaldehyde
4b) propionaldehyde
4c) beta-damascenone
4d) 2,3-pentanedione.

2. Multi-component flavour composition according to claim 1, wherein
I the flavourings of groups 2, 3 and 4 are used together in one component
or
II the flavourings of groups 2 and 4 are used together in one component and the flavourings of group 3 are used in a separate further component
or
III the flavourings of groups 3 and 4 are used together in one component and the flavourings of group 2 are used in a separate further component
or
IV the flavourings of group 2 are used in one component, the flavourings of group. 3 are used in a further component and the flavourings of group 4 are used in yet a further separate component.

3. Multi-component flavour composition according to any one of the preceding claims, wherein the flavourings of group 1 are used
- together in one component
or
- in two separate components, of which one component consists of the flavourings
1a) methylfuranthiol-2,3
1b) furfurylthiol
1d) 3-methyl-2-butene-1-thiol (prenylthiol)
1e) methylthiobutylformate-3,3
and the other component consists of the flavouring
1c) methanethiol.

4. Multi-component composition according to any one of the preceding claims, wherein at least one of the components used in the flavour composition is formulated on a solid carrier system.

5. Multi-component composition according to claim 4, wherein each of the components used is formulated on a solid carrier system separately from the other component(s) used; the solid carrier system preferably being the same for each of the components used.

6. Instant-drink mixture comprising:
- a multi-component flavour composition according to any one of the preceding claims and
- further typical constituents.

7. Foodstuff comprising a sensorially effective amount of a multi-component composition according to any one of claims 1 to 5.

8. Use of a multi-component flavour composition according to any one of claims 1 to 5 to produce, enhance or modify a coffee flavour and/or a coffee odour.

9. Method of imparting a flavour of freshly ground and freshly brewed coffee to objects, **characterised in that** the flavourings necessary for the flavour impression of freshly brewed or freshly ground coffee are prepared in physically separate formulations and combined or recombined for use.

10. Method according to claim 9, **characterised in that** multi-component flavour compositions according to claims 1 to 4 are used.

11. Method according to claim 9 or 10, **characterised in that** the flavourings of groups 1 to 4 according to claim 2 are combined as separate constituents A to D to form the following combinations I to IV:
| Combination | Separate constituents | | | |
|---|---|---|---|---|
| | A | B | C | D |
| I | Group 1 | Group 2 | -- | -- |
| | | Group 3 | | |
| | | Group 4 | | |
| II | Group 1 | Group 2 | Group 3 | -- |
| | | Group 4 | | |
| III | Group 1 | Group 2 | Group 3 | -- |
| | | | Group 4 | |
| IV | Group 1 | Group 2 | Group 3 | Group 4 |

12. Flavoured foodstuffs, **characterised in that** they are produced by the method according to at least one of claims 9 to 11.

## Revendications

1. Composition aromatique à plusieurs composants destinée à conférer un arôme de café, comprenant les substances aromatiques suivantes d'un groupe 1 :
1a) méthylfurannethiol-2,3,
1b) furfurylthiol
1c) méthanethiol
1d) 3-méthyl-2-butène-1-thiol (prénylthiol)
1e) méthylthiobutylformiate-3,3
ainsi que, dans un ou plusieurs composants séparés des substances aromatiques du groupe 1, les substances aromatiques suivantes d'un groupe 2 :
2a) 3-méthylthiopropanal
2b) o-méthyltiophénol (thiogaïacol)
2c) 2-acétyl-2-thiazoline (acétylthiazoline)
2d) 2-acétylthiazole,
les substances aromatiques suivantes d'un groupe 3 :
3a) 2-méthylbutanal
3b) 3-méthylbutanal
3c) butanedione-2,3
3d) méthyldiéthylpyrazine-3,5,2
3e) 2-éthyl-3,5-diméthylpyrazine et/ou 2-éthyl-3,6-diméthylpyrazine et/ou 2 (ou 3)-éthyl-3,4 (ou 2,5)-diméthylpyrazine
3f) 2-méthoxy-3-(1-méthylpropyl)-pyrazine (méthoxyisobutylpyrazine-2,3)
3g) 4-vinylgaïacol
3h) 2,5-diméthyl-4-hydroxy-3(2H)-furannone (diméthylhydroxyfurannone-2,5,4,3)
3i) 4-méthyl-5-éthyl-3-hydroxy-2(5H)-furannone (méthyléthylhydroxyfurannone-4,5,3,2)
ainsi que
les substances aromatiques suivantes d'un groupe 4 :
4a) acétaldéhyde
4b) propionaldéhyde
4c) damascénone-bêta
4d) pentanedione-2,3.

2. Composition aromatique à plusieurs composants selon la revendication 1, dans laquelle
I on met en oeuvre les substances aromatiques des groupes 2, 3 et 4 ensemble dans un composant
ou bien
II on met ensemble les substances aromatiques des groupes 2 et 4 dans un composant et les substances aromatiques du groupe 3 dans un autre composant séparé
ou bien
III on met ensemble les substances aromatiques des groupes 3 et 4 dans un composant et les substances aromatiques du groupe 2 dans un autre composant séparé
ou bien
IV on met ensemble les substances aromatiques du groupe 2 dans un composant, les substances aromatiques du groupe 3 dans un autre composant et les substances aromatiques du groupe 4 dans encore un autre composant séparé.

3. Composition aromatique à plusieurs composants selon l'une des revendications qui précèdent, les substances aromatiques du groupe 1 étant mises en oeuvre
- ensemble dans un composant
ou bien
- dans deux composants séparés dont l'un consiste en les substances aromatiques suivantes :
1a) méthylfurannethiol-2,3
1b) furfurylthiol
1d) 3-méthyl-2-butène-1-thiol (prénylthiol)
1e) méthylthiobutylformiate-3,3
et l'autre consiste en la substance aromatique
1c) méthanethiol.

4. Composition à plusieurs composants selon l'une des revendications qui précèdent, dans laquelle au moins un des composants est formulé sur un système de support solide.

5. Composition à plusieurs composants selon la revendication 4, dans laquelle chacun des composants est formulé séparément du ou des autres composants sur un système de support solide, ce système de support solide étant de préférence identique pour chacun des composants.

6. Mélange pour boisson instantanée comprenant :
- une composition aromatique à plusieurs composants selon l'une des revendications qui précèdent et
- d'autres constituants typiques.

7. Produit alimentaire comprenant une quantité sensorielle efficace d'une composition à plusieurs composants selon l'une des revendications 1 à 5.

8. Utilisation d'une composition aromatique à plusieurs composants selon l'une des revendications 1 à 5 pour produire, renforcer ou modifier un arôme de café et/ou une odeur de café.

9. Procédé pour conférer à des matières un arôme de café fraîchement moulu et fraîchement coulé **caractérisé en ce que** l'on met les substances aromatiques nécessaires pour donner l'impression d'arôme de café fraîchement coulé ou fraîchement broyé à l'état de formulation physiquement séparée et on les combine ou les recombine pour l'utilisation.

10. Procédé selon la revendication 9, **caractérisé en ce que** l'on utilise des compositions aromatiques à plusieurs composants des revendications 1 à 4.

11. Procédé selon la revendication 9 ou 10, **caractérisé en ce que** l'on combine les substances aromatiques des groupes 1 à 4 selon la revendication 2 à l'état de constituants séparés A à D, en les combinaisons I à IV ci-après :
| Combinaison | Constituants séparés | | | |
|---|---|---|---|---|
| | A | B | C | D |
| I | Groupe 1 | Groupe 2 | --- | --- |
| | | Groupe 3 | | |
| | | Groupe 4 | | |
| II | Groupe 1 | Groupe 2 | Groupe 3 | --- |
| | | Groupe 4 | | |
| III | Groupe 1 | Groupe 2 | Groupe 3 | --- |
| | | | Groupe 4 | |
| IV | Groupe 1 | Groupe 2 | Groupe 3 | Groupe 4 |

12. Produits alimentaires aromatisés, **caractérisés en ce qu'**ils ont été préparés par le procédé selon au moins une des revendications 9 à 11.
